# EUROPEAN PATENT SPECIFICATION

(11) **EP 4 122 315 B1**
(45) Date of publication and mention of the grant of the patent: **03.12.2025**
(21) Application number: 22185150.4
(22) Date of filing: 15.07.2022
(51) Int. Cl.: A01G 3/053

(54) **TRIMMING MACHINE**
HECKENSCHERE
TAILLE HAIE

(30) Priority: 19.07.2021 JP 2021118586
(43) Date of publication of application: 25.01.2023
(73) Proprietor: Yamabiko Corporation, Ohme-shi, Tokyo 198-8760 (JP)
(72) Inventor: KONO, Toru, Tokyo, 198-8760 (JP); SHIMIZU, Kunio, Tokyo, 198-8760 (JP); KODAMA, Hisao, Tokyo, 198-8760 (JP)
(74) Representative: Kordel, Mattias

(56) References cited:
- EP-A1- 2 338 325
- WO-A1-2010/098149
- WO-A1-2014/068987

## Description

### BACKGROUND

### Technical Field

The present invention relates to a trimming machine.

### Background Art

A trimming machine, such as a hedge trimmer and a clipper used for trimming or cropping hedges or plants, includes a blade drive gear rotationally driven by a drive source in a body case, a cam (eccentric cam) including upper and lower eccentric disks that are each provided on one face side of the gear, and a pair of upper and lower blades mutually slidably facing and contacting each other, and is configured to perform trimming or cropping by causing the eccentric cam to reciprocate the elongated upper and lower blades in mutually (relatively) opposite directions along the longitudinal direction of the blades, thereby grinding their cutting edges in a comb-like tooth shape against each other (see, for example, Patent Literature 1).

There are some trimming machines including a control circuit portion that detects operation of a forward-reverse switching lever of an electric motor (hereinafter simply referred to as a motor in some cases) as a drive source and switches the rotational direction of the motor, in which when the operation of the forward-reverse switching lever is detected, the rotational direction of the motor is switched so as to reverse the directions in which the blades on the upper and lower sides (upper blade and lower blade) are driven (see, Patent Literature 2).

Other trimming machines disclose the features of the preamble of the claim 1 (see Patent Literature 3 and Patent Literature 4)

### Citation List

### Patent Literature

Patent Literature 1: JP 2019-193598 A
Patent Literature 2: JP 2011-250773 A
Patent Literature 3: WO 2010/098146 A1.
Patent Literature 4: WO 2014/068987 A1

### SUMMARY

However, in the conventional trimming machines as described above, when the cutting edges are caught in a solid material made of a wide branch, a fence, steel or the like while performing trimming or cropping, causing the blades to be locked, the user needs to operate the forward-reverse switching lever to release the cutting edges from the branches or the like every time, and thus, there is a problem in that the user finds the operation burdensome or inconvenient.

The present invention has been made in view of the foregoing and provides a trimming machine capable of releasing the cutting edges from the branch or the like by reversing the rotation of the motor without requiring any additional operation (with normal operation) by a user, such as operating the forward-reverse switching lever, when the blades are locked.

To provide solution to the foregoing, the trimming machine according to the present invention basically includes: an electric motor; a blade drive gear rotationally driven by the electric motor; an eccentric cam provided in the gear; a pair of blades relatively slidably facing and contacting each other, the pair of blades reciprocated, by the eccentric cam, in relatively opposite directions along the longitudinal direction of the blades, thereby grinding cutting edges against each other, the cutting edges provided in a protruding manner with gaps therebetween in the pair of blades; a trigger lever adapted to drive the blades; and a controller adapted to control a rotational driving of the electric motor based on input from the trigger lever, in which the controller is adapted to switch a rotational direction of the electric motor at each time of the input from the trigger lever based only on the input from the trigger lever, and in that the controller does not have functions of determining whether the electric motor is locked.

In a preferred aspect, at start-up of the electric motor based on the input from the trigger lever, the controller may increase an applied power to the electric motor as compared to the applied power in normal operation.

In another preferred aspect, the electric motor may be an electric motor with a wheel.

In yet another preferred aspect, the wheel may be an outer rotor.

In further another preferred aspect, at a time of the input from the trigger lever, the controller may reverse the rotational direction of the electric motor in a case where a rotation of the electric motor is stopped, and may not reverse the rotational direction of the electric motor in a case where the rotation of the electric motor is not stopped.

### BRIEF DESCRIPTION OF THE DRAWINGS

FIG. 1 is a perspective view of a hedge trimmer according to an embodiment of the present invention;
FIG. 2 is a side view of the hedge trimmer according to the embodiment of the present invention;
FIG. 3 is a cross-sectional side view of the hedge trimmer according to the embodiment of the present invention;
FIG. 4 is a lower face view of the hedge trimmer according to the embodiment of the present invention, in a state in which a bottom plate of a case of a drive transmission mechanism is removed;
FIG. 5 is a view for explaining the motion of an upper blade and a lower blade engaging with an eccentric cam and a movable plate;
FIG. 6 is a view showing the configuration of a control circuit of the hedge trimmer according to the embodiment of the present invention;
FIG. 7 shows a flowchart of the invention (where determination on locking is not made) of a control flow of the control circuit of FIG. 6; and
FIG. 8 shows a flowchart of an example embodiment not comprised in the invention (where determination on locking is made) of a control flow of the control circuit of FIG. 6.

### DETAILED DESCRIPTION

An embodiment of the present invention will be described in detail below by referring to the drawings, as appropriate. A hedge trimmer, which is one type of a trimming machine, will be described below by way of an example. Further, in the present specification, the blade (cutting edge) side is the front side or the leading end side, the body case side is the rear side or the proximal end side, and the side where a front handle held by an operator projects is the upper side and its opposite side is the lower side. However, up-down, front-back, and left-right directions are used for convenience in explaining the hedge trimmer of the present embodiment and do not limit the configuration or use state of the hedge trimmer.

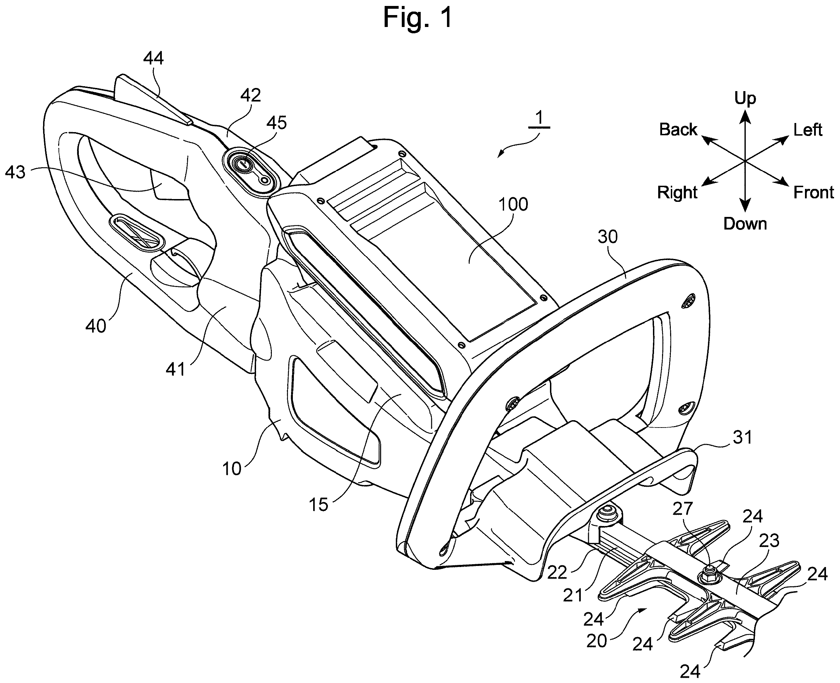

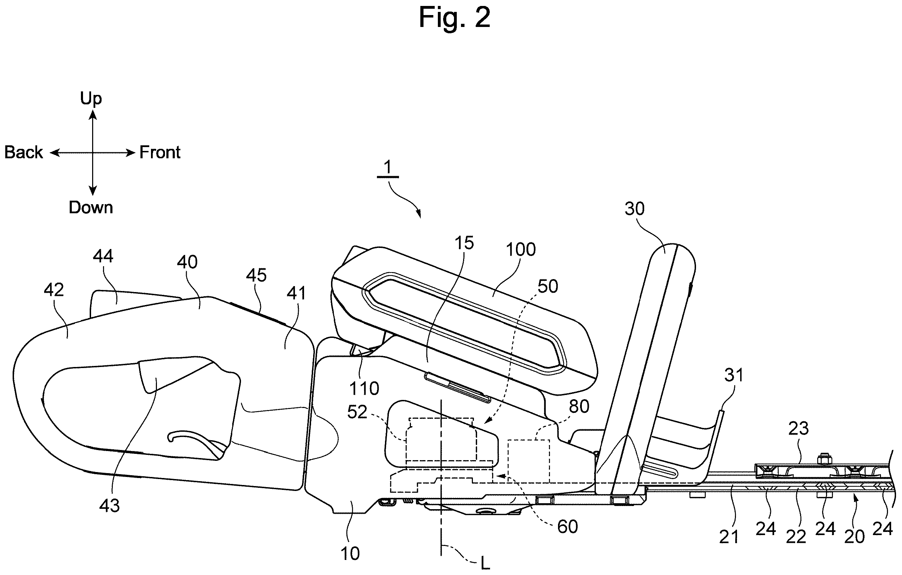

As shown in FIG. 1, a hedge trimmer 1 of the present embodiment is a hand-held compact cutting working machine used for trimming or cropping hedges or plants, and is electrically driven by a battery 100 mounted thereon. As shown in FIG. 2, the hedge trimmer 1 includes an electric motor 50 as a drive source, a blade assembly 20 disposed forward of the electric motor 50, and a body case 10 that houses the electric motor 50.

The body case 10 is a resin body in a box shape with the upper face inclined relative to the lower face. The upper face of the body case 10 is inclined from the rear side toward the front side. That is, the front portion of the body case 10 is formed lower than the rear portion. Further, the body case 10 is in a substantially triangular shape in a side view.

The upper face of the body case 10 is provided with a battery attachment portion 15 for attaching the battery 100. The battery attachment portion 15 is inclined from the rear portion toward the front portion so as to follow the upper face of the body case 10.

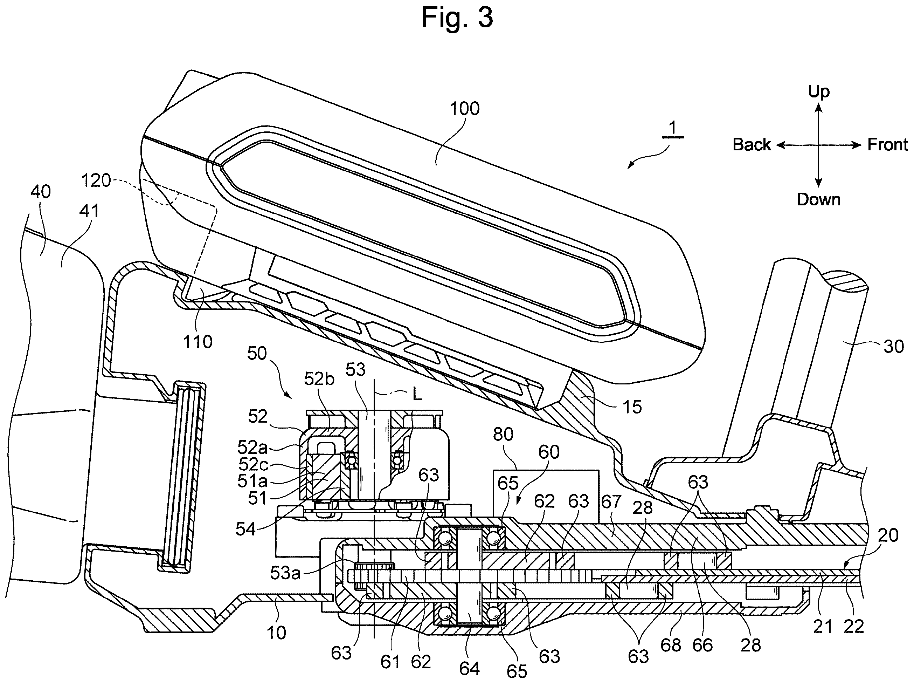

The battery 100 is a known battery that houses a secondary battery such as a lithium ion storage battery in its cuboid case extending in the front-back direction. An engagement portion 110 that engages with the battery attachment portion 15 projects in the rear end portion on the lower face of the battery 100 as shown in FIG. 2 and FIG. 3.

For attaching the battery 100 to the battery attachment portion 15, while the battery 100 is caused to slide from the rear side toward the front side relative to the battery attachment portion 15, the lower portion of the battery 100 is fitted to the battery attachment portion 15. Then, when the front end portion of the battery 100 reaches a position where it is supported on the front end portion of the battery attachment portion 15, the engagement portion 110 of the battery 100 engages with the battery attachment portion 15, thereby fixing the battery 100 to the battery attachment portion 15.

The upper face of the battery attachment portion 15 is provided with a metal connection terminal (not shown). The connection terminal is electrically connected to a control board (not shown) or the electric motor 50. Further, a connection terminal of the battery 100 is connected to the connection terminal of the battery attachment portion 15, so as to supply power from the battery 100 to the control board or the electric motor 50.

For removing the battery 100 from the battery attachment portion 15, a coupling lever 120 (FIG. 3) provided in the rear end portion of the battery 100 is lifted to disengage the engagement portion 110 from the battery attachment portion 15 so as to allow the battery 100 to be slidable rearward relative to the battery attachment portion 15.

As shown in FIG. 1, a front handle 30 is provided forward of the body case 10. The front handle 30 is disposed forward of the battery 100 attached to the battery attachment portion 15. The front handle 30 is in a gate-like shape as viewed from the front side, and has left and right vertical portions extending downward respectively from the left and right ends of a lateral portion extending in the left-right direction, with the lower ends of both the vertical portions fixed to the front end portion of the body case 10. A front guard 31 is provided between the lower ends of the two vertical portions of the front handle 30. The front guard 31 is formed so as to cover the blade assembly 20 (the proximal end portion thereof) from the upper side.

A rear handle 40 is provided rearward of the body case 10. A coupling portion 41 coupled to the rear portion of the body case 10 and a gripping portion 42 having an opening formed therethrough in the left-right direction are formed in the rear handle 40. To hold the hedge trimmer 1, the operator grips the rear handle 40 by inserting his/her hand into the opening of the gripping portion 42. As shown in FIG. 3, the coupling portion 41 of the rear handle 40 is coupled rotatably about the axis in the front-back direction relative to the rear face of the body case 10, thereby allowing the rear handle 40 in its entirety to be rotatable about the axis in the front-back direction relative to the body case 10.

As shown in FIG. 1, an inner periphery portion of the gripping portion 42 of the rear handle 40 is provided with a trigger lever 43 that is an operation means to rotate the electric motor 50 and thereby drive the blade assembly 20, while the operator grips the handle. Further, the upper face of the gripping portion 42 is provided with a power switch 45 as well as an unlocking lever 44 for unlocking the trigger lever 43.

It should be noted that it is obvious that the shape of the body case 10, the arrangement or attachment structure of the battery 100, and the like are not limited to those in the illustrated examples.

Further, in the hedge trimmer 1 of the present embodiment, power is supplied from the battery 100 to the control board or the electric motor 50, but for example, power may be supplied to the control board or the electric motor 50 from an external power source via a power cord instead of using the battery 100.

As shown in FIG. 2, the blade assembly 20 extends linearly forward relative to the electric motor 50 and projects forward from the front end portion of the body case 10. The blade assembly 20 is a cutting device including an upper blade 21 and a lower blade 22 that are made of metal and a resin cover 23.

The upper blade 21 and the lower blade 22 are an elongated plate-shaped edge tool and are overlaid with one above the other. The upper blade 21 and the lower blade 22 are in an upper and lower pair mutually (relatively) slidably facing and contacting each other. As shown in FIG. 1, a plurality of cutting edges 24 is formed in the upper blade 21 and the lower blade 22 so as to protrude with predetermined gaps therebetween in the left-right direction along the longitudinal direction of the blades. The cover 23 is a protective member to prevent the contact between the operator's hand and the upper blade 21 and the lower blade 22, and covers the upper face of the upper blade 21.

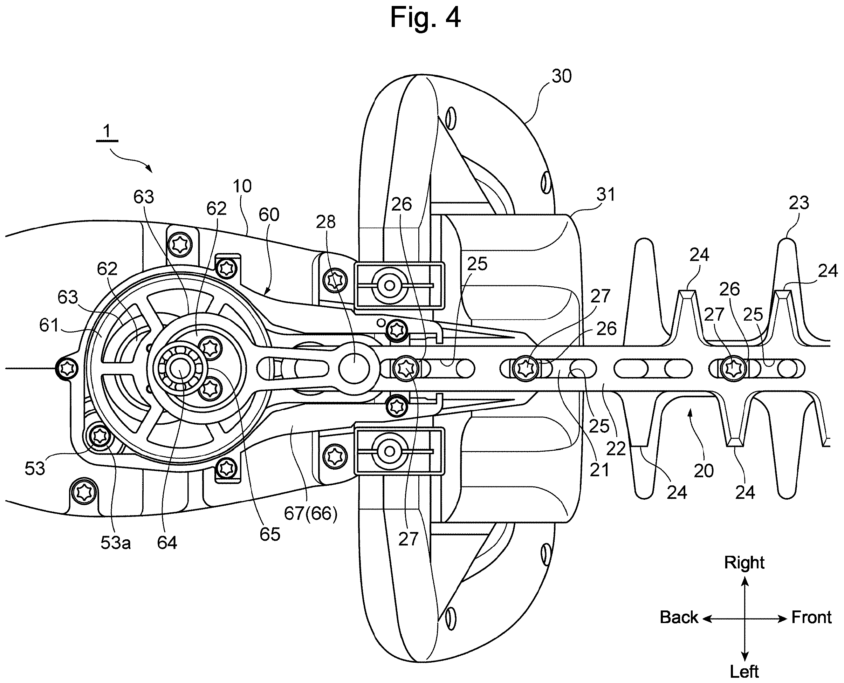

As shown in FIG. 4, a required number of elongated apertures (elongated apertures in the longitudinal direction) 25 are formed with predetermined gaps therebetween in the upper blade 21 and the lower blade 22 along the longitudinal direction. The elongated apertures 25 each have a length that allows the reciprocating motion of the upper blade 21 and the lower blade 22. In addition, square cylindrical spacers 26 each having a rectangular insertion round aperture in a plan view are slidably fit-inserted into the elongated apertures 25 (elongated apertures overlaid with one above the other) of the upper blade 21 and the lower blade 22. Bolts 27 as a fastening member are inserted into the insertion round apertures (in some locations in the longitudinal direction, a through-hole provided in the cover 23 may be included) of the square cylindrical spacers 26 for fastening. In this manner, the upper blade 21 and the lower blade 22 are securely fastened at predetermined locations along the longitudinal direction while being mutually (relatively) slidably held.

As shown in FIG. 3 and FIG. 4, a connecting portion 28 that is connected to a movable plate 63, which will be described later, is formed in each of the rear end portions (the proximal end portions) of the upper blade 21 and the lower blade 22. In the present embodiment, the connecting portion 28 is formed as a short cylindrical projection (provided in a protruding manner) and is inserted into an opening of a leading end portion of the movable plate 63 described later so that the upper blade 21 and the lower blade 22 are coupled with the movable plate 63. However, the configuration of the connecting portion 28, that is, the connecting configuration between the upper blade 21 and the lower blade 22 and the movable plate 63 is not limited to the example shown in the drawings. For example, a circular opening as the connecting portion may be formed in each of the upper blade 21 and the lower blade 22 and a cylindrical projection formed in the movable plate 63 may be inserted into the openings for coupling.

The rear end portions of the upper blade 21 and the lower blade 22 are inserted into the body case 10 as shown in FIG. 3 and FIG. 4. The rear end portions of the upper blade 21 and the lower blade 22 are coupled to the electric motor 50 via a drive transmission mechanism 60.

The drive transmission mechanism 60 includes a blade drive gear 61, upper and lower eccentric cams (hereinafter simply referred to as cams) 62, 62 provided in the blade drive gear 61, and upper and lower movable plates (also referred to as connecting rods) 63, 63.

The blade drive gear 61 is a disk-like gear having a support shaft 64 projecting in the up-down direction from the center portion. The upper end portion and the lower end portion of the support shaft 64 are rotationally supported by upper and lower bearings 65, 65 provided in the body case 10. That is, the blade drive gear 61 rotates about the axis of the support shaft 64.

The upper and lower cams 62, 62 formed of eccentric disks project on the upper face and the lower face of the blade drive gear 61, respectively. The upper and lower cams 62, 62 are positioned eccentrically to one side and the other side, respectively, relative to the center of rotation (the center of the support shaft 64) of the blade drive gear 61. In the present embodiment, the upper and lower cams 62, 62 are integrally formed in the gear 61 through shaving.

The cam 62 on the upper side is inserted into an opening of a rear end portion of the movable plate 63 on the upper side for engagement, and the connecting portion 28 in the rear end portion of the upper blade 21 is inserted into the opening in the leading end portion of the movable plate 63 on the upper side for coupling. The cam 62 on the lower side is inserted into the opening of the rear end portion of the movable plate 63 on the lower side for engagement, and the connecting portion 28 in the rear end portion of the lower blade 22 is inserted into the opening in the leading end portion of the movable plate 63 on the lower side for coupling.

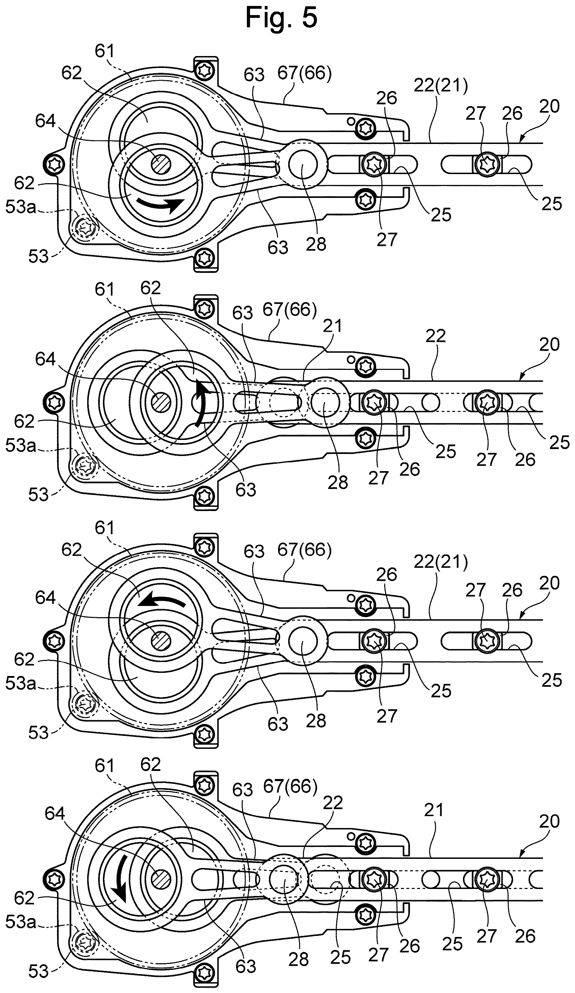

The drive transmission mechanism 60 is configured such that the upper and lower cams 62, 62 rotationally move along with the rotation of the blade drive gear 61, so that the upper and lower movable plates 63, 63 reciprocate in the front-back direction and the upper blade 21 and the lower blade 22 reciprocate oppositely to each other in the front-back direction (in other words, reciprocate with predetermined strokes in mutually opposite directions along the longitudinal direction) (see FIG. 4 and FIG. 5). In other words, the configuration is made such that the rotational motion of the electric motor 50 is converted into the reciprocating motion of the upper blade 21 and the lower blade 22 in the front-back direction (longitudinal direction) via the upper and lower movable plates 63, 63 of the drive transmission mechanism 60.

The aforementioned blade drive gear 61, cams 62, 62, movable plates 63, 63, and the like are housed in a case 66 of the drive transmission mechanism 60. The case 66 includes a top plate 67 and a bottom plate 68. The top plate 67 and the bottom plate 68 of the case 66 are formed so as to cover a rear end portion of the blade assembly 20 as well as the blade drive gear 61, cams 62, 62, movable plates 63, 63, and the like from the upper and lower sides. The blade assembly 20 projects forward from a front end portion of the case 66.

It should be noted that the present embodiment adopts a type of method using a connecting rod in which the upper and lower cams 62, 62 and the upper blade 21 and the lower blade 22 (connecting portions 28, 28 thereof) are indirectly connected via the upper and lower movable plates 63, 63, but it is obvious that for example, a type of method using an elongated aperture may be adopted, in which elongated apertures (elongated apertures in the left-right direction) as the connecting portions are formed in the rear end portions (proximal end portions) of the upper blade 21 and the lower blade 22, and the upper and lower cams 62, 62 are inserted into the elongated apertures (connecting portions) so as to cause the upper blade 21 and the lower blade 22 to reciprocate in the front-back direction, that is, the upper and lower cams 62, 62 and the upper blade 21 and the lower blade 22 (connecting portions thereof) are directly connected.

The electric motor 50 is provided above a rear portion of the drive transmission mechanism 60. The electric motor 50 includes a stator 51, an outer rotor 52, an output shaft 53, and a base member 54.

The stator 51 is provided with a plurality of coils 51a. A lower end portion of the base member 54 provided on an inner periphery of the stator 51 is fixed to the case 66 (top plate 67 thereof) of the drive transmission mechanism 60.

The output shaft 53 is inserted into a bearing provided on an inner periphery surface of the base member 54. In this manner, the output shaft 53 is rotationally supported on the base member 54. A lower end portion of the output shaft 53 is provided with an output gear 53a. The output gear 53a meshes with the blade drive gear 61 of the drive transmission mechanism 60.

In the outer rotor 52, a cylindrical peripheral wall portion 52a surrounding the outer periphery of the stator 51 and each coil 51a, and a top portion 52b closing an upper face opening of the peripheral wall portion 52a are formed. The outer rotor 52 of the present embodiment is made of iron, but the material of the outer rotor as a wheel is not limited. A plurality of magnets 52c is attached on an inner periphery surface of the peripheral wall portion 52a.

An upper end portion of the output shaft 53 is coupled to the center portion of the top portion 52b of the outer rotor 52. In this manner, the outer rotor 52 is rotationally supported on the stator 51, so that the output shaft 53 and the outer rotor 52 rotate in association with each other. A rotating axis L of the outer rotor 52 and the output shaft 53 extends in the up-down direction orthogonal to the extending direction (front-back direction) of the blade assembly 20.

The outer rotor 52 has a diameter (in the lateral direction) greater than the length in the rotating axis L direction (in the up-down direction). That is, when the outer rotor 52 is viewed from the lateral direction (the direction orthogonal to the rotating axis L), it is in a flat shape with the lateral width greater than the height.

The outer rotor 52 is rotationally supported on the stator 51 and is coupled to the rear end portion of the blade assembly 20 via the drive transmission mechanism 60. Further, when power is supplied from the battery 100 to each coil 51a of the stator 51, the outer rotor 52 and the output shaft 53 rotate and the drive force is transmitted to the blade assembly 20 via the drive transmission mechanism 60, so that the upper blade 21 and the lower blade 22 reciprocate oppositely to each other in the front-back direction (see FIG. 4 and FIG. 5). That is, the cams 62, 62 of the drive transmission mechanism 60 cause the upper and lower pair of elongated upper blade 21 and lower blade 22 to reciprocate in mutually (relatively) opposite directions along the longitudinal direction of the blades, thereby grinding the cutting edges 24 in a comb-like tooth shape, which are provided in the blades, against each other, so as to perform trimming or cropping of hedges or plants.

As shown in FIG. 2 and FIG. 3, the body case 10 houses a control circuit 80 as a controller that controls the rotational driving of the electric motor 50 (outer rotor 52 and output shaft 53 thereof). The control circuit 80 produces a drive command value for driving the blade assembly 20 based on the input (specifically, the operation amount) from the trigger lever 43 provided in the rear handle 40 and controls the rotational driving (rotational directions of forward rotation and reverse rotation and the number of rotations) of the electric motor 50 based on the produced drive command value.

In addition to the aforementioned configurations, in the control circuit 80 of the power-driven hedge trimmer 1 of the present embodiment, the following measures are adopted to address a case in which when the cutting edges are caught in a solid material made of a wide branch, a fence, steel or the like while performing trimming or cropping, causing the blades to be locked, the cutting edges are released from the branch or the like by reversing the rotation of the motor 50 without requiring any additional operation (with normal operation) by the user, such as operating the forward-reverse switching lever.

### (Configuration of the control circuit)

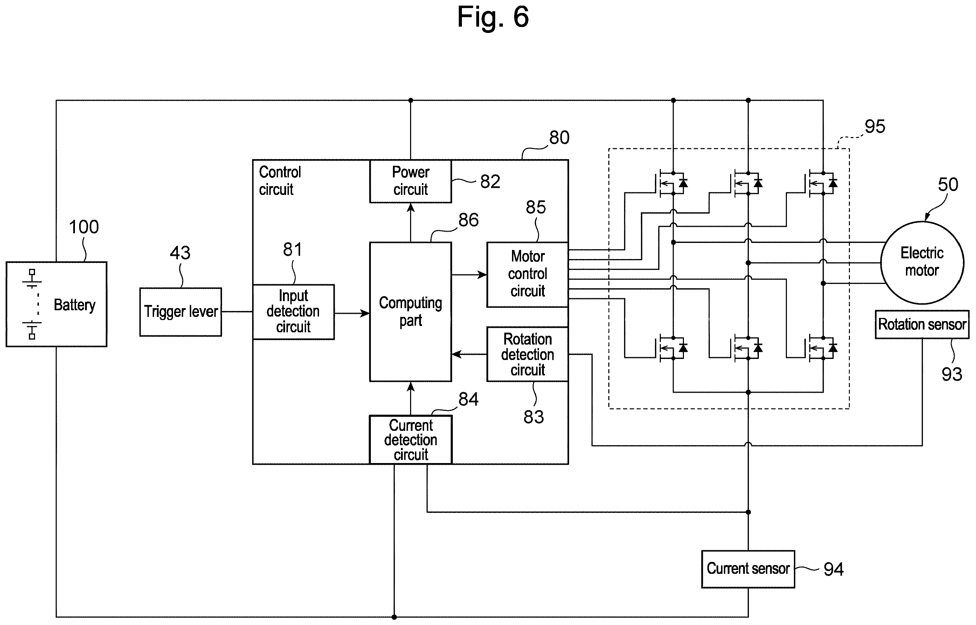

With reference to FIG. 6, the control circuit 80 of the hedge trimmer 1 will be described.

As shown in FIG. 6, the control circuit 80 includes an input detection circuit 81, a power circuit 82, a rotation detection circuit 83, a current detection circuit 84, a motor control circuit 85, and a computing part 86. The computing part 86 includes a microcomputer (not shown) having a CPU for outputting a drive signal based on a processing program and data, a ROM for storing a program or control data corresponding to a flowchart described later, a RAM for temporarily storing data, a timer, and the like.

The input detection circuit 81 detects input from the trigger lever 43 (whether it is operated), and the detected information is input to the computing part 86.

The power circuit 82 sets a voltage applied to the motor 50, namely, a duty ratio of a PWM signal, in response to the operation amount of the trigger lever 43.

The rotation detection circuit 83 detects the number of rotations of the motor 50 based on the output information from a rotation sensor 93 disposed in the motor 50 and the detected umber of rotations (including the rotational direction) is input to the computing part 86.

The current detection circuit 84 detects the current flowing through the motor 50 based on the output information from a current sensor 94 disposed in a motor drive circuit part 95, and the detected current is input to the computing part 86.

The motor control circuit 85 provides the PWM signal to the motor drive circuit part 95 based on the output from the computing part 86 and adjusts the power to be supplied to the motor 50 by controlling the pulse width of the PWM signal so as to control the rotational direction and the number of rotations of the motor 50.

The computing part 86 produces the drive command value for driving the blade assembly 20 based on the input information from the trigger lever 43 or the like, and outputs the produced drive command value to the motor control circuit 85, so as to control the rotational driving of the motor 50. The drive command value includes a motor rotational direction command value that indicates the rotational direction of the motor 50 and a motor rotation number command value that indicates the number of rotations of the motor 50.

Herein, in the present embodiment, in controlling the rotational driving of the motor 50, the computing part 86 of the control circuit 80 performs control of reversing the motor rotational direction command value that indicates the rotational direction of the motor 50 at each time of the input from the trigger lever 43, based on the input information from the trigger lever 43 and the motor rotational direction command value stored in a storage part (not shown), thereby switching the rotational direction (forward rotational direction and reverse rotational direction) of the motor 50 at each time of the input from the trigger lever 43. More specifically, the computing part 86 of the control circuit 80 performs control of alternately switching the rotational direction (forward rotational direction and reverse rotational direction) of the motor 50 based only on the input from the trigger lever 43.

More specifically, in the present embodiment, the computing part 86 determines whether the number of rotations of the motor 50 is zero or not at each time of the input from the trigger lever 43, and only when the number of rotations of the motor 50 is zero, control of reversing the motor rotational direction command value is performed, and when the number of rotations of the motor 50 is not zero, the motor rotational direction command value immediately before is maintained as the motor rotational direction command value (that is, the motor rotational direction command value is not reversed). That is, only in a case where the rotation of the motor 50 is stopped, the rotational direction of the motor 50 is reversed (reversed from the rotational direction before the input from the trigger lever 43)(from forward rotation to reverse rotation or from reverse rotation to forward rotation), while in a case where the rotation of the motor 50 is not stopped, the rotational direction of the motor 50 is maintained (the same rotational direction as that before the input from the trigger lever 43 is maintained)(from forward rotation to forward rotation or from reverse rotation to reverse rotation). In this manner, the motor 50 can be prevented from rotating in the reverse during its inertial rotation.

Herein, the number of rotations of the motor 50 may be determined based on the output information from the rotation sensor 93 (the input from the rotation detection circuit 83) or the output information from the current sensor 94 (the input from the current detection circuit 84).

Further, at start-up of the motor 50 based on the input from the trigger lever 43, the computing part 86 performs control of increasing the power applied (which may be voltage applied or current input) to the motor 50 as compared to that in normal operation, thereby enabling to increase the rotational driving power of the motor 50 at start-up of the motor 50.

Furthermore, the computing part 86 of the control circuit 80 may additionally perform the following control, when it has functions of determining and detecting whether the blade assembly 20 (upper blade 21, lower blade 22) or the motor 50 in the present embodiment is locked.

That is, it is determined whether the number of rotations of the motor 50 is zero or not, and when the number of rotations of the motor 50 is zero, only in a case where a flag "locked," by which the locking of the motor 50 is determined, is not set, control of reversing the motor rotational direction command value that indicates the rotational direction of the motor 50 is performed, and in a case where the flag "locked" is set, the motor rotational direction command value immediately before is maintained as the motor rotational direction command value that indicates the rotational direction of the motor 50 (that is, the motor rotational direction command value is not reversed). Further, at predetermined timing after starting and rotating the motor 50, unlocking determination is made. Thus, after the motor 50 is locked, only at the time of initial locking determination (detection), the rotational direction of the motor 50 is reversed to the direction opposite to the cutting direction, while afterwards, unless the motor 50 is unlocked, the rotational direction of the motor 50 is maintained in the direction opposite to the cutting direction. It should be noted that in normal operation (when locking does not occur), as described above, the rotational direction of the motor 50 is reversed at each time of the input from the trigger lever 43.

The following may be used as examples as a method of determining whether the blade assembly 20 (upper blade 21, lower blade 22) or the motor 50 in the present embodiment is locked, but it is obvious that the determination method is not limited thereto.
(a) change in the number of rotations in a case where the motor rotation is stopped: a case in which the time until the number of motor rotations reaches zero is equal to or less than a given amount of time.
(b) change in the motor current (load torque): a case in which the rising angle of the motor current is equal to or above a given value and the motor current equal to or above a given threshold continues for a given period of time.
(c) change in the pressure applied to the blades or gear: a case in which the change in the pressure equal to or above a given threshold is detected by attaching a dedicated sensor to the cam or the motor.
(d) combination of the aforementioned conditions (a), (b), and (c): for instance, a case in which the amount of time in which the number of rotations is zero is equal to or less than a given amount of time and the average current value during that time is equal to to or above a given value.

Further, when the computing part 86 of the control circuit 80 determines and detects that the blade assembly 20 (upper blade 21, lower blade 22) or the motor 50 in the present embodiment is locked, it may perform control of stopping the electric motor 50 (the rotational driving thereof), notifying the operator of the blades (upper blade 21, lower blade 22) being locked (for example, notifying visually with a display, notifying auditorily with a sound), continuously reversing the rotation of the electric motor 50 each time the locking is detected, or increasing the power applied to the electric motor 50.

With such control performed by the control circuit 80, when the cutting edges 24 are caught in a solid material made of a wide branch, a fence, steel or the like while performing trimming or cropping, causing the blades to be locked, the operator (user) temporarily releases the trigger lever 43 (which discontinues the transmission of the input from the trigger lever 43 to the control circuit 80), and after the rotation of the electric motor 50 is stopped, the operator operates the trigger lever 43 again so that the input from the trigger lever 43 is transmitted to the control circuit 80 to reverse the rotational direction of the motor 50 (switch to the opposite direction), thereby releasing the cutting edges 24 from the branch or the like.

It should be noted that also in normal operation, when the operator (user) temporarily releases the trigger lever 43 (which discontinues the transmission of the input from the trigger lever 43 to the control circuit 80) and operates the trigger lever 43 again after the rotation of the electric motor 50 is stopped, the input from the trigger lever 43 is transmitted to the control circuit 80 so that the rotational direction of the motor 50 is reversed (switched to the opposite direction), but trimming or cropping operation is not obstructed.

### (Control flow of the control circuit (control of the rotational direction of the motor: where determination on locking is not made))

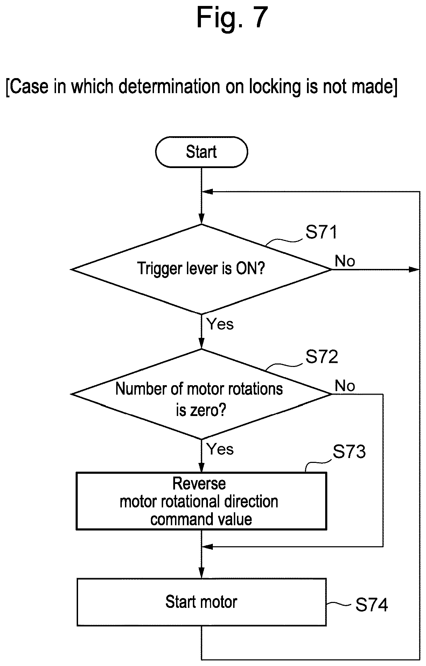

Next, with reference to the flowchart of FIG. 7, the control flow of the control circuit 80 of the hedge trimmer 1, in particular, the control flow of the rotational direction of the motor will be described in detail. FIG. 7 shows the present invention wherein the control flow where the computing part 86 of the control circuit 80 does not have functions of determining and detecting whether the motor 50 is locked.

As shown in FIG. 7, first, in S71, it is determined whether the trigger lever 43 is turned on or not (that is, whether there is input from the trigger lever 43), and in a case where the trigger lever 43 is turned on, the process proceeds to S72.

In S72, it is determined whether the number of rotations of the motor 50 is zero or not, and in a case where the number of rotations of the motor 50 is zero, the process proceeds to S73, and in a case where the number of rotations of the motor 50 is not zero, the process skips S73 to proceed to S74.

In S73, the motor rotational direction command value that indicates the rotational direction of the motor 50 is reversed and the process proceeds to S74.

In S74, the motor 50 is started and rotated in the rotational direction according to the motor rotational direction command value reversed in S73 or the motor rotational direction command value before the input from the trigger lever 43.

As described above, at start-up of the motor 50, the power applied to the motor 50 is controlled to be increased as compared to that in normal operation.

### (Control flow of the control circuit (control of the rotational direction of the motor: where determination on locking is made))

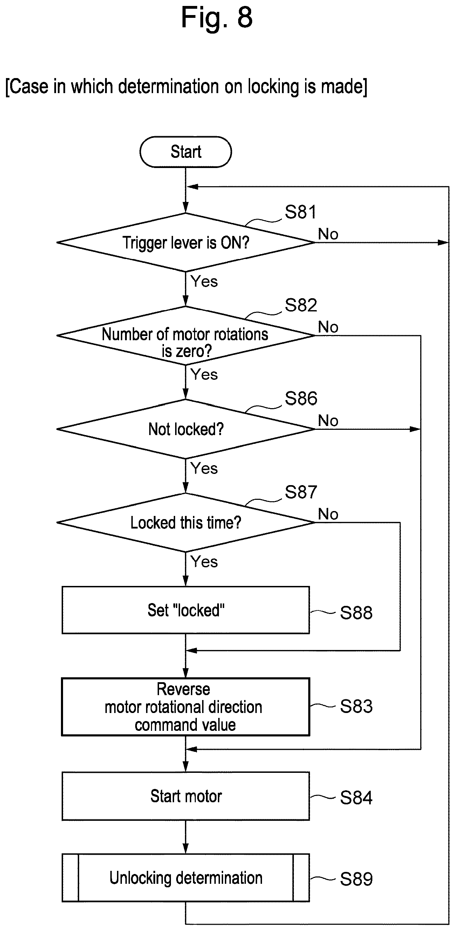

Next, with reference to the flowchart of FIG. 8, the control flow of the control circuit 80 of the hedge trimmer 1, in particular, the control flow of the rotational direction of the motor will be described in detail. FIG. 8 shows an example of the control flow not according to the invention where the computing part 86 of the control circuit 80 has functions of determining and detecting whether the motor 50 is locked.

As shown in FIG. 8, first, in S81, it is determined whether the trigger lever 43 is turned on or not (that is, whether there is input from the trigger lever 43), and in a case where the trigger lever 43 is turned on, the process proceeds to S82.

In S82, it is determined whether the number of rotations of the motor 50 is zero or not, and in a case where the number of rotations of the motor 50 is zero, the process proceeds to S86, and in a case where the number of rotations of the motor 50 is not zero, the process skips S86, S87, S88, and S83 to proceed to S84.

In S86, it is determined whether the flag "locked" is not set, and in a case where the flag "locked" is not set, the process proceeds to S87, and in a case where the flag "locked" is set, the process skips S87, S88, and S83 to proceed to S84.

In S87, in the state in which the flag "locked" is not set, it is determined whether locking has occurred this time, and in a case where locking has occurred this time, the process proceeds to S88, and in a case where locking has not occurred this time, the process skips S88 to proceed to S83.

In S88, the flag "locked" indicating that the locking has occurred is set, and the process proceeds to S83.

In S83, the motor rotational direction command value that indicates the rotational direction of the motor 50 is reversed and the process proceeds to S84.

In S84, the motor 50 is started and rotated in the rotational direction according to the motor rotational direction command value reversed in S83 or the motor rotational direction command value before the input from the trigger lever 43.

In S89, at predetermined timing after starting and rotating the motor 50, unlocking determination is made.

As described above, at start-up of the motor 50, the power applied to the motor 50 is controlled to be increased as compared to that in normal operation. Further, when the locking is detected (when the flag "locked" is set), the control of stopping the motor 50 (the rotational driving thereof) or notifying the operator of the locking being detected (for example, notifying with a display or a sound) may be performed.

As described above, the hedge trimmer 1 of the present embodiment includes the electric motor 50, the blade drive gear 61 rotationally driven by the electric motor 50, the eccentric cam 62 provided in the gear 61, and the pair of blades relatively slidably facing and contacting each other, in which the eccentric cam 62 reciprocates the pair of blades in relatively opposite directions along the longitudinal direction of the blades, thereby grinding the cutting edges 24, which are provided in a protruding manner with gaps therebetween in the pair of blades, against each other. Further, the hedge trimmer 1 of the present embodiment includes the trigger lever 43 for driving the blades and the control circuit (controller) 80 that controls the rotational driving of the electric motor 50 based on the input from the trigger lever 43. In addition, the control circuit (controller) 80 switches the rotational direction of the electric motor 50 at each time of the input from the trigger lever 43 (more specifically, alternately switches the rotational direction of the electric motor 50 based only on the input from the trigger lever 43). Thus, the rotational direction of the motor 50 is switched at each time of the input from the trigger lever 43 that is operated by the user during operation, so that when the cutting edges are caught in a solid material made of a wide branch, a fence, steel or the like while performing trimming or cropping, causing the blades to be locked, the cutting edges 24 can be released from the branch or the like by moving the blades (cutting edges) in the reverse direction with normal operation.

It should be noted that since a predetermined amount of time is required to reach the steady-state voltage (the number of rotations at steady state) from the start-up of the motor 50, and the steady-state voltage (the number of rotations at steady state) is normally not reached at the time the cutting edges 24 reach the same position by switching the rotational direction of the motor 50 to the reverse direction, even when the rotational direction of the motor 50 is switched to the reverse direction, the blades are unlikely to be locked again. During that time, the user only needs to move the hedge trimmer 1 (the portion of the cutting edges 24 thereof) to prevent the locking again.

Further, at start-up of the electric motor 50 based on the input from the trigger lever 43, the control circuit (controller) 80 increases the power applied to the electric motor 50 as compared to that in normal operation. Thus, when the cutting edges are caught in a solid material made of a wide branch, a fence, steel or the like while performing trimming or cropping, causing the blades to be locked, even in the case where the cutting edges 24 unmovably dig into the branch or the like, the cutting edges 24 can be released from the branch or the like by increasing the power applied to the motor 50.

Further, the electric motor 50 is an electric motor with a wheel. The wheel is the outer rotor 52. With this, by increasing the power applied to the motor 50 at its start-up, the cutting edges 24 are more easily released from the branch or the like.

Furthermore, the control circuit (controller) 80 detects the locking of the blades. Thus, such detection of the locking enables to stop the motor 50 (the rotational driving thereof), to notify the user of the blades being locked, to continuously reverse the rotation of the motor 50 each time the locking is detected, or to increase the power applied to the motor 50.

In addition, the control circuit (controller) 80 does not detect the locking of the blades. Thus, without detecting the locking by leaving the determination to the user, the configuration can be simplified.

Further, at the time of the input from the trigger lever 43, the control circuit (controller) 80 reverses the rotational direction of the electric motor 50 in a case where the rotation of the electric motor 50 is stopped and does not reverse the rotational direction of the electric motor 50 in a case where the rotation of the electric motor 50 is not stopped. In this manner, the rotational direction of the electric motor 50 is reversed at each time of the input from the trigger lever 43, but the motor 50 can be prevented from rotating in the reverse (being inverted) during its inertial rotation.

Furthermore, at the time of the input from the trigger lever 43, in a case where the rotation of the electric motor 50 is stopped, the control circuit (controller) 80 determines whether the blades are locked, and reverses the rotational direction of the electric motor 50 if the blades are not locked, and does not reverse the rotational direction of the electric motor 50 if the blades are already locked.

Further, at the time of the input from the trigger lever 43, in a case where the rotation of the electric motor 50 is stopped, the control circuit (controller) 80 determines whether the blades are locked, and if locking is detected this time while the blades are not locked, the control circuit (controller) 80 sets the flag indicating the locking and reverses the rotational direction of the electric motor 50.

That is, at the time of the input from the trigger lever 43, in a case where the rotation of the electric motor 50 is stopped, the control circuit (controller) 80 determines whether the flag indicating the locking is set, and reverses the rotational direction of the electric motor 50 if the flag indicating the locking is not set and does not reverse the rotational direction of the electric motor 50 if the flag indicating the locking is set, and if locking is detected this time while the flag indicating the locking is not set, the control circuit (controller) 80 sets the flag indicating the locking and reverses the rotational direction of the electric motor 50.

In this manner, after the electric motor 50 is locked, only at the time of initial locking determination (detection), the rotation of the electric motor 50 is reversed, while afterwards, unless it is unlocked, the rotation of the electric motor 50 is not reversed. In normal operation (when locking does not occur), the rotation is reversed at each time of the input from the trigger lever 43.

As described above, according to the present embodiment, since the rotational direction of the motor 50 is switched at each time of the input from the trigger lever 43 that is operated by the user during operation, when the cutting edges 24 are caught in a solid material made of a wide branch, a fence, steel or the like while performing trimming or cropping, causing the blades to be locked, the cutting edges 24 can be released from the branch or the like by moving the blades (cutting edges) in the reverse direction with normal operation.

The present invention is limited by the appended claims.

The blade assembly 20 of the hedge trimmer 1 of the present embodiment extends linearly forward as shown in FIG. 1, and is configured such that the upper blade 21 and the lower blade 22 reciprocate in the front-back direction. However, the configuration of the blade assembly is not limited thereto. For example, as an example of the blade assembly, the configuration with the blades in a T-shape may be adopted, in which the blades extending in the left-right direction are provided in the leading end portion of the linear portion extending forward from the electric motor 50 so as to be reciprocated in the left-right direction. Further, the blade assembly 20 of the hedge trimmer 1 of the present embodiment is of a type in which the upper and lower eccentric cams 62, 62 reciprocate the upper blade 21 and the lower blade 22 in relatively opposite directions along the longitudinal direction of the blades, thereby performing trimming or cropping (that is, the upper blade 21 and the lower blade 22 both move), but it is obvious that the blade assembly 20 may be of a type in which one of the upper blade 21 and the lower blade 22 does not move.

### DESCRIPTION OF SYMBOLS

- 1: Hedge trimmer (trimming machine)
- 10: Body case
- 15: Battery attachment portion
- 20: Blade assembly
- 21: Upper blade
- 22: Lower blade
- 23: Cover
- 24: Cutting edge
- 25: Elongated aperture
- 26: Square cylindrical spacer
- 27: Bolt
- 28: Connecting portion
- 30: Front handle
- 31: Front guard
- 40: Rear handle
- 41: Coupling portion
- 42: Gripping portion
- 43: Trigger lever
- 44: Unlocking lever
- 45: Power switch
- 50: Electric motor
- 60: Drive transmission mechanism
- 61: Blade drive gear
- 62: Eccentric cam
- 63: Movable plate (connecting rod)
- 64: Support shaft
- 65: Bearing
- 66: Case
- 67: Top plate
- 68: Bottom plate
- 80: Control circuit (controller)
- 81: Input detection circuit
- 82: Power circuit
- 83: Rotation detection circuit
- 84: Current detection circuit
- 85: Motor control circuit
- 86: Computing part
- 93: Rotation sensor
- 94: Current sensor
- 95: Motor drive circuit part
- 100: Battery
- 110: Engagement portion
- 120: Coupling lever
- L: Rotating axis

## Claims

1. A trimming machine (1) comprising:
an electric motor (50);
a blade drive gear (61) rotationally driven by the electric motor (50);
an eccentric cam (62) provided in the gear (61);
a pair of blades (21, 22) relatively slidably facing and contacting each other, the pair of blades (21, 22) reciprocated, by the eccentric cam (62), in relatively opposite directions along a longitudinal direction of the blades (21, 22), thereby grinding cutting edges (24) against each other, the cutting edges (24) provided in a protruding manner with gaps therebetween in the pair of blades (21, 22);
a trigger lever (43) adapted to drive the blades (21, 22); and
a controller (80) adapted to control a rotational driving of the electric motor (50) based on input from the trigger lever (43), **characterized in that**
the controller (80) is adapted to switch a rotational direction of the electric motor (50) at each time of the input from the trigger lever (43) based only on the input from the trigger lever (43), and **in that** the controller (80) does not have functions of determining whether the electric motor (50) is locked.

2. The trimming machine (1) according to claim 1, wherein the controller (80) is adapted to, at start-up of the electric motor (50) based on the input from the trigger lever (43), increase an applied power to the electric motor (50) as compared to the applied power in normal operation.

3. The trimming machine (1) according to claim 1, wherein the electric motor (50) is an electric motor with a wheel.

4. The trimming machine (1) according to claim 3, wherein the wheel is an outer rotor.

5. The trimming machine (1) according to claim 1, wherein the controller (80) is adapted to, at a time of the input from the trigger lever (43), reverse the rotational direction of the electric motor (50) in a case where a rotation of the electric motor (50) is stopped, and not to reverse the rotational direction of the electric motor (50) in a case where the rotation of the electric motor (50) is not stopped.

## Patentansprüche

1. Schneidemaschine (1), aufweisend:
einen Elektromotor (50);
ein Klingenantriebsgetriebe (61), das durch den Elektromotor (50) zur Rotation angetrieben wird;
einen exzentrischen Nocken (62), der in dem Getriebe (61) vorgesehen ist;
ein Paar von Klingen (21, 22), die relativ zueinander verschiebbar einander zugewandt sind und einander berühren, wobei das Paar von Klingen (21, 22) durch den exzentrischen Nocken (62) in relativ entgegengesetzten Richtungen entlang einer Längsrichtung der Klingen (21, 22) hin- und herbewegt wird, wodurch Schneidkanten (24) gegeneinander reiben, wobei die Schneidkanten (24) an dem Paar von Klingen (21, 22) vorstehend mit Lücken dazwischen vorgesehen sind;
ein Betätigungshebel (43), der ausgelegt ist, die Klingen (21, 22) anzutreiben;
und
eine Steuereinrichtung (80), die ausgelegt ist, einen Drehantriebszustand des Elektromotors (50) basierend auf einer Eingabe von dem Betätigungshebel (43) zu steuern, **dadurch gekennzeichnet, dass**
die Steuereinrichtung (80) ausgelegt ist, eine Drehrichtung des Elektromotors (50) zu jeder Zeit der Eingabe von dem Betätigungshebel (43) nur basierend auf der Eingabe von dem Betätigungshebel (43) umzuschalten, und dass die Steuereinrichtung (80) keine Funktionen aufweist, um zu bestimmen, ob der Elektromotor (50) blockiert ist.

2. Schneidemaschine (1) nach Anspruch 1, wobei die Steuereinrichtung (80) ausgelegt ist, beim Anlaufen des Elektromotors (50) basierend auf der Eingabe von dem Betätigungshebel (43) die dem Elektromotor (50) zugeführte Leistung im Vergleich zur im Normalbetrieb zugeführten Leistung zu erhöhen.

3. Schneidemaschine (1) nach Anspruch 1, wobei der Elektromotor (50) ein Elektromotor mit einem Rotor ist.

4. Schneidemaschine (1) nach Anspruch 3, wobei der Rotor ein Außenrotor ist.

5. Schneidemaschine (1) nach Anspruch 1, wobei die Steuereinrichtung (80) ausgelegt ist, zum Zeitpunkt der Eingabe von dem Betätigungshebel (43) die Drehrichtung des Elektromotors (50) in einem Fall umzukehren, in dem eine Drehung des Elektromotors (50) gestoppt ist, und die Drehrichtung des Elektromotors (50) in einem Fall nicht umzukehren, in dem die Drehung des Elektromotors (50) nicht gestoppt ist.

## Revendications

1. Taille-haie (1) comprenant :
un moteur électrique (50) ;
un engrenage d'entraînement de lame (61) entraîné en rotation par le moteur électrique (50) ;
une came excentrique (62) aménagée dans l'engrenage (61) ;
une paire de lames (21, 22) relativement coulissable en face l'une par rapport à l'autre et en contact l'une avec l'autre, la paire de lames (21, 22) étant animée d'un mouvement de va-et-vient, au moyen de la came excentrique (62), dans des directions relativement opposées le long d'une direction longitudinale des lames (21, 22), rodant ainsi les bords de coupe (24) l'un contre l'autre, les bords de coupe (24) étant aménagés de manière saillante avec des espaces entre eux dans la paire de lames (21, 22) ;
un levier de déclenchement (43) adapté pour entraîner les lames (21, 22) ; et
une unité de commande (80) adaptée pour commander un entraînement en rotation du moteur électrique (50) sur la base d'une entrée provenant du levier de déclenchement (43), **caractérisé en ce que**
l'unité de commande (80) est adaptée pour inverser une direction de rotation du moteur électrique (50) à chaque fois qu'il y a une entrée provenant du levier de déclenchement (43) uniquement sur la base de l'entrée provenant du levier de déclenchement (43), et **en ce que** l'unité de commande (80) n'a pas pour fonction de déterminer si le moteur électrique (50) est verrouillé.

2. Taille-haie (1) selon la revendication 1, dans lequel, au démarrage du moteur électrique (50) sur la base de l'entrée provenant du levier de déclenchement (43), l'unité de commande (80) est adaptée pour augmenter une puissance appliquée au moteur électrique (50) en comparaison avec la puissance appliquée en fonctionnement normal.

3. Taille-haie (1) selon la revendication 1, dans lequel le moteur électrique (50) est un moteur électrique avec une roue.

4. Taille-haie (1) selon la revendication 3, dans lequel la roue est un rotor externe.

5. Taille-haie (1) selon la revendication 1, dans lequel, lorsqu'il y a une entrée provenant du levier de déclenchement (43), l'unité de commande (80) est adaptée pour inverser la direction de rotation du moteur électrique (50) dans un cas où une rotation du moteur électrique (50) est arrêtée, et pour ne pas inverser la direction de rotation du moteur électrique (50) dans un cas où la rotation du moteur électrique (50) n'est pas arrêtée.
